(19) Europäisches Patentamt
European Patent Office
Office européen des brevets

(11) **EP 1 815 648 B1**

(12) **EUROPÄISCHE PATENTSCHRIFT**

(45) Veröffentlichungstag und Bekanntmachung des Hinweises auf die Patenterteilung:
**02.10.2013 Patentblatt 2013/40**

(51) Int Cl.:
*H04L 12/801* (2013.01)

(21) Anmeldenummer: **05801571.0**

(22) Anmeldetag: **27.10.2005**

(86) Internationale Anmeldenummer:
**PCT/EP2005/055602**

(87) Internationale Veröffentlichungsnummer:
**WO 2006/053817 (26.05.2006 Gazette 2006/21)**

(54) **ABSCHÄTZUNG DES BANDBREITENBEDARFS IN EINEM KOMMUNIKATIONSNETZ MIT ZUGANGSKONTROLLEN**

ESTIMATION OF BANDWIDTH REQUIREMENTS IN A COMMUNICATIONS NETWORK WITH ACCESS CONTROLS

EVALUATION DU BESOIN EN BANDE PASSANTE DANS UN RESEAU DE COMMUNICATION A CONTROLES D'ACCES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.11.2004 DE 102004055722**

(43) Veröffentlichungstag der Anmeldung:
**08.08.2007 Patentblatt 2007/32**

(73) Patentinhaber: **Nokia Siemens Networks GmbH & Co. KG**
**81541 München (DE)**

(72) Erfinder:
• **CHARZINSKI, Joachim**
**81825 München (DE)**
• **GRUBER, Claus**
**80336 München (DE)**

(56) Entgegenhaltungen:
**EP-A2- 0 827 307     US-B1- 6 738 819**

• **GERSHT A ET AL: "OPTIMAL DYNAMIC VIRTUAL PATH BANDWIDTH ALLOCATION AND RESTORATION IN ATM NETWORKS" 28. November 1994 (1994-11-28), PROCEEDINGS OF THE GLOBAL TELECOMMUNICATIONS CONFERENCE (GLOBECOM). SAN FRANCISCO, NOV. 28 - DEC. 2, 1994, NEW YORK, IEEE, US, PAGE(S) 770-776 , XP000488646 ISBN: 0-7803-1821-8 Seite 770, linke Spalte, Zeile 6 - Zeile 10 Seite 770, rechte Spalte, Zeile 6 - Zeile 8 Seite 771, rechte Spalte, Zeile 30 - Seite 772, linke Spalte, Zeile 8 Seite 772, rechte Spalte, Zeile 5 - Seite 774, linke Spalte, Zeile 3 Seite 774, rechte Spalte, Zeile 31 - Zeile 34**
• **E TAKAHASHI, Y TANAKA: "Auction-based effective bandwidth allocation mechanism" TELECOMMUNICATION SYSTEMS, [Online] Bd. 24, Nr. 2-4, 2. November 2004 (2004-11-02), Seiten 1-5, XP002403066 ISSN: 1572-9451 Gefunden im Internet: URL:http://www.tanaka.giti.waseda.ac.jp/Do cument/Pricing/ICT2003_et.pdf> [gefunden am 2006-10-11]**

**Beschreibung**

Die Erfindung betrifft ein Verfahren und eine Vorrichtung zur Abschätzung des Bandbreitenbedarfs in einem mit Knoten und Links gebildeten Kommunikationsnetz mit Zugangskontrollen.

Eine der derzeit wichtigsten Entwicklungen auf dem Gebiet der Netze ist die Weiterentwicklung von Datennetzen für die Übertragung von Echtzeitverkehr, welcher Sprachinformationen, Videoinformationen und Audioinformationen enthalten kann. Für Dienste, die die Übertragung von Echtzeitverkehr erfordern, müssen so genannte Dienstgüteparameter garantiert werden.

Das wichtigste Beispiel für eine Datennetztechnologie, welche zur Übertragung von Sprache weiterentwickelt wird, sind die so genannten IP-Netze, welche auf dem Internet Protokoll (IP) basieren. Wichtige Parameter, welche für die Übertragung von Echtzeitverkehr kontrolliert werden müssen, sind beispielsweise die Laufzeit der Pakete, der Jitter und die Verlustrate. Vor allem im Hinblick auf die Kriterien bezüglich der Laufzeit muss verhindert werden, dass innerhalb von Netzen Überlastsituationen auftreten. Eine wichtige Maßnahme zur Verhinderung von Überlast ist die Beschränkung des über das Netz übertragenen Verkehrsvolumens. Zu diesem Zweck wird in vielen echtzeitverkehrfähigen Datennetzen eine Zulassungsbeschränkung oder Zulassungskontrolle für zu übertragenden Verkehr durchgeführt. Bei Netzen, welche am Netzeingang eine Zulassungskontrolle für zu übertragenden Verkehr vorsehen, sollte nach Möglichkeit diese Zugangskontrolle derart durchgeführt werden, dass einerseits eine Übertragung mit den erforderlichen Dienstgütemerkmalen möglich ist, andererseits aber möglichst wenig Verkehr abgewiesen bzw. nicht übertragen wird.

Für eine optimale Anpassung von Grenzen für die Zugangskontrolle zu einem Netz ist erforderlich, das zu fördernde Verkehrsaufkommen zu kennen. In der Verkehrstheorie verwendet man zur Darstellung dieser Information die so genannte Verkehrsmatrix, welche als Matrixeinträge das zwischen den einzelnen Knoten eines Netzes zu befördernde Verkehrsaufkommen enthält. Dabei wird nicht der tatsächlich beförderte oder transportierte Verkehr dargestellt, sondern der zum Transport anstehende bzw. angebotene Verkehr, d.h. der Verkehr, der bei transportiert würde, wenn durch im Netz beliebig viel Bandbreite zur Verfügung stünde.

Ein Verfahren zur optimalen Bandbreitenzuteilung anhand von Verkehrsparametern ist zum Beispiel in der Druckschrift GERSHT A ET AL: "OPTIMAL DYNAMIC VIRTUAL PATH BANDWIDTH ALLOCATION AND RESTORATION IN ATM NETWORKS", 28. November 1994 (1994- 11- 28), PROCEEDINGS OF THE GLOBAL TELECOMMUNICATIONS CONFERENCE (GLOBECOM) . SAN FRANCISCO, NOV. 28- DEC. 2, 1994, NEW YORK, IEEE, US, PAGE (S) 770- 776, XP000488646, ISBN: 0- 7803- 1821- 8 zu finden.

Die Erfindung hat zur Aufgabe eine Vorgehensweise anzugeben, mit der der Bandbreitenbedarf in einem Kommunikationsnetz mit Zugangskontrollen abgeschätzt werden kann.

Die Aufgabe wird durch den Gegenstand der unabhängigen Ansprüche gelöst.

Erfindungsgemäß wird ein Schätzwert für den Bandbreitenbedarf (das mit der angemeldeten Bandbreite gewichtete Verkehrsangebot) für den zwischen einen Eingangsknoten und einen Ausgangsknoten des Netzes zu übertragenden Verkehr bestimmt. Dieser Schätzwert ist auf ein Zeitintervall bezogen. Zur Ermittlung dieses Schätzwertes werden zwei Werte bestimmt: Ein erster Wert für die innerhalb des Zeitintervalls zur Beförderung zwischen den beiden Knoten zugelassene Verkehrsmenge bzw. Bandbreite und ein zweiter Wert, welche der akkumulierten Bandbreite, der während des Zeitintervalls abgelehnten Reservierungsanforderungen entspricht. Für den ersten Wert wird die mittlere, während des Zeitintervalls für die Übertragung zwischen den beiden Knoten reservierte Bandbreite verwendet. Der zweite Wert kann durch Registrierung der innerhalb des Zeitintervalls nicht zugelassenen Reservierungsanforderungen bzw. der bei diesen Reservierungen angeforderten Bandbreite ermittelt werden. Derartige Reservierungsanforderungen werden z. B. von einer Kontrollinstanz am Netzrand  empfangen, die dann auch für die Reservierung zuständig ist. Die Kontrollinstanz kann dann bei abgelehnten Reservierungsanforderungen die angeforderte Bandbreite extrahieren und aufsummieren.

Aus den beiden Werten wird dann ein Schätzwert für den Bandbreitenbedarf für zwischen den beiden Knoten zu übertragenden Verkehr gebildet, indem man den ersten Wert mit dem gewichteten zweiten Wert addiert. Eine Gewichtung bzw. Normierung ist geboten, weil die Summe der Bandbreiten der abgelehnten Reservierungsanforderungen eine obere Grenze für den tatsächlich zusätzlich notwendigen Bandbreitenbedarf darstellt, der durch Multiplikation mit einem diese Tatsache berücksichtigenden Faktor zu einer realistischeren Abschätzung wird. Zu dieser Gewichtung bzw. Normierung kann die Anzahl der im Zeitintervall abgelehnten Reservierungsanforderungen verwendet werden. Beispielsweise kann man den zweiten Wert durch die Anzahl der im Zeitintervall abgelehnten Reservierungsanforderungen dividieren (was einer Normierung entspräche). Eine Verbesserung kann man dadurch erhalten, dass man durch einen zwischen Null und Eins liegenden Interpolationsparameter einführt, mit dem beispielsweise die Anzahl der im Zeitintervall abgelehnten Reservierungsanforderungen potenziert wird. Dadurch kann die Wiederholung von Reservierungsanforderungen berücksichtig werden. Alternativ oder ergänzend kann eine explizite Berücksichtigung von Wiederholungen erfolgen, z.B. indem innerhalb eines Zeitintervalls aufeinander folgende abgelehnte Reservierungsversuche mit demselben Ursprung und demselben Ziel als Wiederholungsversuche gewertet werden. Außerdem kann der Wert mit der geschätzten Haltedauer der abgelehnten Reservierung, bezogen auf das Zeitintervall der Messung, gewichtet werden.

Eine Weiterentwicklung des Verfahrens ist dadurch gegeben, dass man für zwei aufeinander folgende Zeitintervalle Schätzwerte ermittelt und diese interpoliert. So kann ein so genannter "exponentially waited moving average" aus den Ergebnissen aufeinander folgende Schätzungen gebildet werden. Auf diese Weise wird der Langzeitentwicklung des Bandbreitenbedarfs Rechnung getragen bzw. dieser berücksichtigt.

Alternativ oder zusätzlich kann die Messung anstatt in aufeinander folgenden Zeitintervallen in einem so genannten "sliding window" oder "jumping window" erfolgen, wobei aufeinander folgende Messungen nicht in disjunkten, sondern in überlappenden Zeitintervallen durchgeführt werden. Somit kann eine Interpolation der Messwerte durch eine Verlängerung des Zeitintervalles der Messung erreicht werden.

Bei manchen Netzen ist ein Sollwert für den Bandbreitenbedarf vorgegeben. Dieser Sollwert kann beispielsweise ein durch den Netzbetreiber eingestellter Wert sein oder er entspricht einem langfristigen Erfahrungswert. Ein derartiger Sollwert kann berücksichtigt werden, z. B. indem man das Maximum aus Sollwerten und Schätzwert nimmt oder beide Werte interpoliert.

Die Abschätzung des Bandbreitenbedarfs kann mittels einer Vorrichtung des Netzes durchgeführt werden. Bei dieser Vorrichtung kann es sich beispielsweise um einen in der Regel zentralen Kontrollserver des Netzes handeln. Es ist aber ebenso denkbar, die Ermittlung der Schätzwerte in Teilen des Managementsystems des Netzes oder in einer Dienststeuerungsvorrichtung vorzusehen. Die Ermittlung des Schätzwertes kann sowohl zentral als auch dezentral vorgenommen werden. Bei einer dezentralen Ermittlung, beispielsweise jeweils für bestimmte Knotenpaare des Netzes kann man Mittel zur Berechnung des Schätzwertes in Routern des Netzes oder in für die Zugangskontrolle zuständigen Zugangskontrolleinheiten des Netzes (in der Regel am Netzrand) vorsehen. Die Realisierung der Erfindung in einer der oben genannten Vorrichtungen geschieht vorzugsweise mittels Software bzw. Computerprogrammen.

Die Erfindung erlaubt eine effiziente und schnelle Abschätzung des Bandbreitenbedarfs. Vorzugsweise wird dieser Bandbreitenbedarf für alle Paare aus Eingangs- und Ausgangsknoten des Netzes ermittelt. Aus den Werten des Bandbreitenbedarfs für die Paare aus Eingangs- und Ausgangsknoten können dann bei einer bekannten Verkehrsverteilung (Routing) innerhalb des Netzes die erwarteten Linklasten ermittelt werden. Die erfindungsgemäße Abschätzung des Bandbreitenbedarfs ist besonders vorteilhaft bei Netzen zu verwenden, in denen die Grenzen für die Zugangskontrollen dynamisch angepasst werden, d.h. häufig eine Neubestimmung optimaler Grenzen auf Basis der jeweils aktuellen Verkehrsmatrix erfolgt.

Im Folgenden wird der Erfindungsgegenstand im Rahmen eines Ausführungsbeispiels anhand von einer Figur näher erläutert.

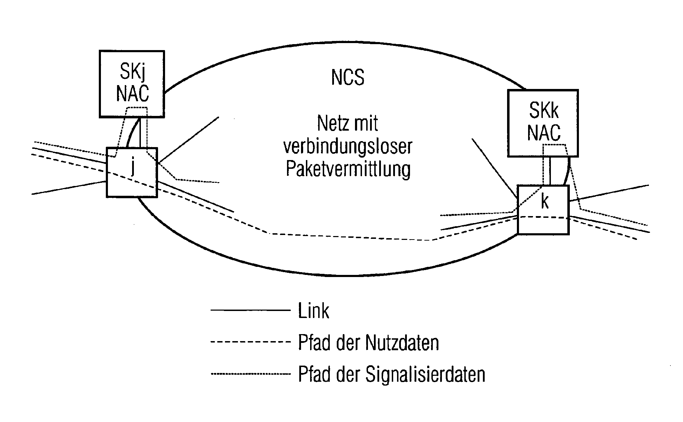

In der Figur ist ein Netz mit verbindungsloser Paketvermittlung gezeigt. In diesem Netz werden für QoS Verkehr Zugangskontrollen durchgeführt. Ein Paar aus Eingangs- und Ausgangsknoten ist durch zwei Router j und k gegeben. Den Knoten sind Signalisierungskomponenten SKj und SKk zugeordnet, welche auch Funktionen für Zugangskontrollen NAC (NAC: network admission control) bereitstellen.

In einem zentralen Kontroll- und Steuerserver NCS (NCS: network control server) wird auf der Basis von Beobachtungen der Budgetauslastungen in den NAC- Einrichtungen eine "aktive Verkehrsmatrix" geschätzt. Dazu werden für jedes Netzrand- zu- Netzrand- (border to border) Budget (d.h. die für die Übertragung zwischen den Netzrändern bzw. Netzknoten zur Verfügung stehende Bandbreite) die folgenden Daten in Zeitintervallen der Länge $\Delta t$ erfasst:

$Y_a$ (j, k)  ... mittlere zugelassene Bandbreite von Knoten j nach Knoten k im Zeitintervall $\Delta t$

$Y_r$ (j, k)  ... Summe der Bandbreiten der abgelehnten Reservierungsanforderungen im Zeitintervall $\Delta t$

$N_r$ (j, k)  ... Anzahl der im Zeitintervall $\Delta t$ abgelehnten Anforderungen

Der zugelassene Verkehr $Y_a$ (j, k) wird i.a. der bezahlten Bandbreite entsprechen. Maßgeblich für die Blockierung (d.h. für die Nichtzulassung von verkehr) ist allerdings der angebotene Verkehr von j nach k, A (j, k) . Bei abgelehnten Reservierungsanforderungen wird zusätzlich die erwartete mittlere Haltedauer ht benötigt. Da bei den abgelehnten Reservierungsanforderungen nicht klar ist, ob sie Wiederholungsversuche darstellen, oder ob es sich um einzelne unabhängige Anforderungen handelt, wird A (j, k) zwischen $Y_a$ (j, k) + $Y_r$ (j, k) *ht/ $\Delta t$ und $Y_a$ (j, k) + $Y_r$ (j, k) * ht/ $\Delta t$ / $N_r$ (j, k) liegen. Im ersten Fall handelt es sich um lauter unabhängige Anforderungen und im zweiten Fall um lauter Wiederholungen derselben Anforderung. Daher wird A (j, k) mit Hilfe eines Interpolationsparameters $\beta \in$ [0, 1] abgeschätzt:

$$A(j,k) = Y_a(j,k) + Y_r(j,k) * ht/\Delta t / (N_r^{\beta})$$

Eine alternative, leichter zu berechnende Interpolation für A(j,k) ist gegeben durch:

$$A(j,k) = Y_a(j,k) + Y_r(j,k) * ( 1 - \beta + \beta/N_r ).$$

Eine andere Möglichkeit, Wiederholungsversuch zu berücksichtigen, ist innerhalb eines Zeitintervalls aufeinander folgende abgelehnte Reservierungsversuche mit demselben Ursprung und demselben Ziel werden als Wiederholungsversuche zu werten. Man kann dieses Vorgehen modifizieren, indem als zusätzliches Kriterium für Wiederholungsversuche zusätzlich die Anforderung derselben Bandbreite verwendet wird. Eine andere Ausgestaltung besteht darin, von Wiederholungsversuchen mit unterschiedlicher Bandbreite nur denjenigen mit der größten (kleinsten, mittleren, ...) Bandbreite zu berücksichtigen. Diesem Vorgehen liegt die Überlegung zugrunde, dass erfolgloser Reservierungsversuch häufig unter Anforderung einer geringeren bandbreite wiederholt werden.

Der für die momentan geschätzte Verkehrsmatrix zu verwendende Wert $A_E(j,k)$ wird durch einen exponentially weighted moving average aus den Ergebnissen aufeinander folgender Schätzungen (i-1, i) bestimmt:

$$A_E(j,k)^{(i)} = \alpha\ A(j,k)^{(i)} + (1-\alpha)\ A_E(j,k)^{(i-1)}$$

Soll zusätzlich eine vom Betreiber vorgegebene geplanter Verkehrsmatrix $T_o$ oder ein Langzeit-Erfahrungswert mit berücksichtigt werden, so werden die folgenden zwei Varianten für die Bestimmung der Elemente $T_A(j,k)$ der aktiven Verkehrsmatrix vorgesehen:

Variante 1 (Verwendung des Maximums der geschätzten und vorgegebenen Werte):

$$T_A(j,k) = \max[T_O(j,k),\ A_E(j,k)]$$

Variante 2 (gewichtete Mittelung zwischen geschätzten und vorgegebenen Werten):

$$T_A(j,k) = \gamma\ T_O(j,k) + (1-\gamma)\ A_E(j,k)\ \ \gamma \in [0,1]$$

Bei $\gamma = 0$ wird nur der aktuell geschätzte, bei $\gamma = 1$ nur der vorgegebene Wert verwendet. Andere Mittelungsfunktionen sind bei der Bestimmung von $T_A(j,k)$ für den Fachmann leicht konstruierbar. Ebenso sind andere Mittelungsfunktionen für die Berechnung von $A_E(j,k)^{(i)}$ dem Fachmann einfach erschließbar.

Andere Realisierungen als einen zentralen Steuerserver oder Network Control Server, der die Verkehrsmatrix aus Daten von NACs schätzt, sind für das in der Figur gezeigte Netz möglich. So können z.B. die beschriebenen Funktionen in ein Netzmanagement-System oder in eine Dienstesteuerung integriert werden. Eine Verteilung oder Replikation der Funktionen in IP-Routern (z.B. Router i, j) oder in Admission-Control-Elementen (z.B. Signalisierungskomponenten SKj, SKk) ist eine alternative Ausgestaltung.

**Patentansprüche**

1. Verfahren zur Abschätzung des Bandbreitenbedarfs in einem mit Knoten und Links gebildeten Kommunikationsnetz mit Zugangskontrollen, bei dem
   für einen Eingangsknoten (j) und einen Ausgangsknoten (k) für ein Zeitintervall

   -- ein erster Wert ($Y_a(j,k)$) für die mittlere, während des Zeitintervalls für die Übertragung zwischen den beiden Knoten (j,k) reservierte Bandbreite ermittelt wird,
   -- ein zweiter Wert ($Y_r(j,k)$) für die Summe der Bandbreiten der während des Zeitintervalls abgelehnten Reservierungsanforderungen ermittelt wird, und
   -- ein Schätzwert (A(j,k)) für den Bandbreitenbedarf für zwischen dem Eingangsknoten (j) und dem Ausgangsknoten (k) zu übertragenden Verkehr aus der Summe des ersten Wertes ($Y_a(j,k)$) und des mit einem Gewichtungsfaktor, der kleiner als 1 ist, gewichteten zweiten Wertes ($Y_r(j,k)$) gebildet wird.

**EP 1 815 648 B1**

2. Verfahren nach Anspruch 1,
**dadurch gekennzeichnet, dass**
zur Bildung des Gewichtungsfaktors die Anzahl ($N_r(j,k)$) der im Zeitintervall abgelehnten Reservierungsanforderungen verwendet wird.

3. Verfahren nach Anspruch 2,
**dadurch gekennzeichnet, dass**
der Gewichtungsfaktor mit einem zwischen null und eins liegenden Interpolationsparameter ($\beta$) gebildet ist.

4. Verfahren nach einem der vorhergehenden Ansprüche,
**dadurch gekennzeichnet, dass**
Wiederholungen von abgelehnten Reservierungsanforderungen bei der Ermittlung des zweiten Werts ($Y_r(j,k)$) berücksichtigt werden.

5. Verfahren nach einem der vorhergehenden Ansprüche,
**dadurch gekennzeichnet, dass**
ein Schätzwert ($A_E(j,k)$) für den aktuellen Bandbreitenbedarf für zwischen dem Eingangsknoten (j) und dem Ausgangsknoten (k) zu übertragenden Verkehr durch Interpolation zweier für aufeinander folgende Zeitintervalle gebildete Schätzwerte gebildet wird.

6. Verfahren nach einem der vorhergehenden Ansprüche, **dadurch gekennzeichnet, dass**
aufeinanderfolgende Messdaten für $Y_a(j,k)$, $Y_r(j,k)$ und $N_r(j,k)$ in überlappenden Zeitintervallen ermittelt werden.

7. Verfahren nach einem der vorhergehenden Ansprüche,
**dadurch gekennzeichnet, dass**

- ein Sollwert ($T_o(j,k)$) für den Bandbreitenbedarf für die Übertragung zwischen den beiden Knoten (i,k) gegeben ist, und
- aus dem Sollwert ($T_o(j,k)$) und einem nach einem der vorhergehenden Ansprüchen gebildeten Schätzwert ($A(j,k)$), $A_E(j,k)$) ein Wert ($T_A(j,k)$) für den Bandbreitenbedarf für die Übertragung zwischen den beiden Knoten (i, k) gebildet wird.

8. Verfahren nach einem der vorhergehenden Ansprüche, **dadurch gekennzeichnet, dass**
ein Verfahren nach einem der vorhergehenden Ansprüche für alle aus einem Eingangsknoten und einem Ausgangsknoten bestehende Knoten-Paare des Netzes durchgeführt wird.

9. Vorrichtung mit Mitteln zur Durchführung eines Verfahrens nach einem der vorhergehenden Ansprüche.

10. Vorrichtung nach Anspruch 9,
**dadurch gekennzeichnet, dass**
die Vorrichtung durch einen Kontrollserver (NCS) des Netzes, durch einen Teil des Managementsystems des Netzes, durch eine Dienststeuerungsvorrichtung, durch einen Router oder durch Zugangskontrolleinheiten (Ski, SKj) realisiert ist.

**Claims**

1. Method for estimating the bandwidth requirement in a communications network which is formed with nodes and links and has access controls, in which,
for an input node (j) and an output node (k) for a time interval,

-- a first value ($Y_a (j, k)$) is determined for the average bandwidth reserved for transmission between the two nodes (j, k) during the time interval,
-- a second value ($Y_r(j,k)$) is determined for the sum of the bandwidths of the reservation requests refused during the time interval, and
-- an estimated value ($A(j,k)$) is formed for the bandwidth requirement for traffic to be transmitted between the input node (j) and the output node (k) from the sum of the first value ($Y_a(j,k)$) and the second value ($Y_r(j,k)$) weighted with a weighting factor of less than 1.

**2.** Method according to Claim 1,
**characterized in that**
the number ($N_r(j,k)$) of reservation requests refused in the time interval is used to form the weighting factor.

**3.** Method according to Claim 2,
**characterized in that**
the weighting factor is formed with an interpolation parameter ($\beta$) between zero and one.

**4.** Method according to one of the preceding claims,
**characterized in that**
repetitions of refused reservation requests are taken into account when determining the second value ($Y_r(j,k)$).

**5.** Method according to one of the preceding claims,
**characterized in that**
an estimated value ($A_E(j,k)$) is formed for the current bandwidth requirement for traffic to be transmitted between the input node (j) and the output node (k) by interpolating two estimated values formed for successive time intervals.

**6.** Method according to one of the preceding claims,
**characterized in that**
successive measurement data are determined for $Y_a(j,k)$, $Y_r(j,k)$ and $N_r(j,k)$ in overlapping time intervals.

**7.** Method according to one of the preceding claims,
**characterized in that**

- a desired value ($T_o(j,k)$) is given for the bandwidth requirement for transmission between the two nodes (j, k), and
- a value ($T_A(j,k)$) is formed for the bandwidth requirement for transmission between the two nodes (j, k) from the desired value ($T_o(j,k)$) and an estimated value ($A(j,k)$), ($A_E(j,k)$) formed according to one of the preceding claims.

**8.** Method according to one of the preceding claims,
**characterized in that**
a method according to one of the preceding claims is carried out for all node pairs of the network consisting of an input node and an output node.

**9.** Apparatus having means for carrying out a method according to one of the preceding claims.

**10.** Apparatus according to Claim 9,
**characterized in that**
the apparatus is implemented by a control server (NCS) of the network, by part of the management system of the network, by a service control apparatus, by a router or by access control units (SKj, SKk).

**Revendications**

**1.** Procédé d'évaluation du besoin en bande passante dans un réseau de communication formé de noeuds et de liens et comportant des contrôles d'accès, selon lequel, pour un noeud d'entrée (j) et un noeud de sortie (k) pour un intervalle de temps :

- une première valeur ($Y_a(j,k)$) de la bande passante moyenne réservée pendant l'intervalle de temps pour la transmission entre les deux noeuds (j, k) est déterminée ;
- une deuxième valeur ($Y_r(j,k)$) de la somme des bandes passantes des requêtes de réservation refusées pendant l'intervalle de temps est déterminée ; et
- une valeur estimée ($A(j,k)$) du besoin en bande passante pour un trafic à transférer entre le noeud d'entrée (j) et le noeud de sortie (k) est formée à partir de la somme de la première valeur ($Y_a(j,k)$) et de la deuxième valeur ($Y_r(j,k)$) pondérée avec un facteur de pondération inférieur à 1.

**2.** Procédé selon la revendication 1, **caractérisé en ce qu'**est utilisé, pour former le facteur de pondération, le nombre ($N_r(j,k)$) des requêtes de réservation refusées dans l'intervalle de temps.

**3.** Procédé selon la revendication 2, **caractérisé en ce que** le facteur de pondération est formé avec un paramètre d'interpolation ($\beta$) situé entre zéro et un.

**4.** Procédé selon l'une des revendications précédentes, **caractérisé en ce que** des répétitions de requêtes de réservation refusées sont prises en compte lors de la détermination de la deuxième valeur ($Y_r(j,k)$).

**5.** Procédé selon l'une des revendications précédentes, **caractérisé en ce qu'**une valeur estimée ($A_E(j,k)$) pour le besoin actuel en bande passante pour un trafic à transférer entre le noeud d'entrée (j) et le noeud de sortie (k) est formée par interpolation de deux valeurs estimées formées pour des intervalles de temps successifs.

**6.** Procédé selon l'une des revendications précédentes, **caractérisé en ce que** des données de mesure successives de $Y_a(j,k)$, $Y_r(j,k)$ et $N_r(j,k)$ sont déterminées dans des intervalles de temps qui se chevauchent.

**7.** Procédé selon l'une des revendications précédentes, **caractérisé en ce que** :

- une valeur de consigne ($T_o(j,k)$) du besoin en bande passante pour la transmission entre les deux noeuds (i, k) est donnée et
- une valeur ($T_A(j,k)$) du besoin en bande passante pour la transmission entre les deux noeuds (i,k) est formée à partir de la valeur de consigne ($T_o(j,k)$) et d'une valeur estimée ($A(j,k)$, $A_E(j,k)$) formée selon l'une des revendications précédentes.

**8.** Procédé selon l'une des revendications précédentes, **caractérisé en ce qu'**un procédé selon l'une des revendications précédentes est exécuté pour toutes les paires de noeuds du réseau composées d'un noeud d'entrée et d'un noeud de sortie.

**9.** Dispositif comportant des moyens pour exécuter un procédé selon l'une des revendications précédentes.

**10.** Dispositif selon la revendication 9, **caractérisé en ce que** le dispositif est réalisé par un serveur de contrôle (NCS) du réseau, par une partie du système de gestion du réseau, par un dispositif de commande de service, par un routeur ou par des unités de contrôle d'accès (Ski, Skj).

SKj
NAC

NCS

Netz mit
verbindungsloser
Paketvermittlung

SKk
NAC

j

k

——————— Link

---------- Pfad der Nutzdaten

···················· Pfad der Signalisierdaten

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GERSHT A et al.** *OPTIMAL DYNAMIC VIRTUAL PATH BANDWIDTH ALLOCATION AND RESTORATION IN ATM NETWORKS,* 28. November 1994

- *PROCEEDINGS OF THE GLOBAL TELECOMMUNICATIONS CONFERENCE (GLOBECOM). SAN FRANCISCO,* 28. November 1994, ISBN 0-7803-1821-8, 770-776